# EUROPEAN PATENT APPLICATION

(11) **EP 4 620 888 A1**
(43) Date of publication of application: **24.09.2025**
(21) Application number: 23890627.5
(22) Date of filing: 03.11.2023
(51) Int. Cl.: B66C 13/18

(54) **ADAPTIVE ALIGNMENT CALIBRATION METHOD, SYSTEM AND DEVICE FOR TRANSPORTATION DEVICE, AND STORAGE MEDIUM**

(30) Priority: 16.11.2022 CN 202211461235
(71) Applicant: Shanghai Westwell Technology Co., Ltd., Shanghai 200050 (CN)
(72) Inventor: TAN, Limin, Shanghai 200050 (CN); SUN, Zuolei, Shanghai 200050 (CN); HUANG, Mei, Shanghai 200050 (CN); XIE, Yi, Shanghai 200050 (CN)
(74) Representative: Guardian IP Consulting I/S
(86) International application number: PCT/CN2023/129523
(87) International publication number: WO 2024/104191

(57) **Abstract**

Provided in the present invention are an adaptive alignment calibration method, system and device for a transportation device, and a storage medium. The method comprises the following steps: generating calibration information on the basis of process data regarding a container being successfully lifted onto a container transportation device by a lifting spreader, wherein the calibration information comprises an alignment guidance value, which is calculated from point cloud data information of the lifting spreader and recorded on the basis of a time sequence, and container type information and lifting device information; collecting container type information of a container to be subjected to a loading and unloading operation, operation task information and the lifting device information, and matching corresponding calibration information; and a lifting device performing the loading and unloading operation at least on the basis of the alignment guidance value calculated from the point cloud data information in the calibration information. In the present invention, a guidance value of a hoisting device can be calculated and stored during alignment, automatic calibration is triggered after an operation completion action is recognized, and alignment parameters are updated online, and are then integrated and reused, thereby improving the alignment operation efficiency.

## Description

### TECHNICAL FIELD

The present disclosure relates to the technical field of hoisting alignment, and specifically to an adaptive alignment calibration method, system and equipment for transport equipment, and a storage medium.

### BACKGROUND

With continuous upgrades of intelligence and automation of traditional manual ports, many ports are focusing on remote automation upgrades of hoisting equipment such as quayside cranes and yard cranes. These upgrades provide accurate alignment information to manual container truck drivers via display screens.

For autonomous vehicles, integrating with intelligent systems of the quayside cranes and the yard cranes increases complexity of deployment processes. Additionally, for traditional manual ports where the hoisting equipment have not undergone intelligent upgrades, autonomous vehicles need to independently identify the quayside cranes and the yard cranes and calculate guidance values for the precise alignment. Due to differences in the hoisting equipment and vehicle configurations, each crane requires individual calibration of alignment parameters to achieve high-precision alignment. However, once calibrated, the parameters require high stability, but the hoisting equipment itself is mobile. For example, a crane frequently moves during yard operations, rendering pre-calibrated parameters potentially obsolete over time.

It should be noted that information disclosed in the background is only intended to enhance understanding of the context of the present disclosure and may include details that are not considered prior art known to those of ordinary skill in the relevant technical field.

### SUMMARY

The present disclosure provides an adaptive alignment calibration method, system and equipment for transport equipment, and a storage medium, to address problems in the prior art. The present disclosure calculates and stores alignment guidance values during alignment, triggers automatic calibration upon detecting task completion, updates alignment parameters online for reuse, thereby improving efficiency of alignment operations.

Embodiments of the present disclosure provide an adaptive alignment calibration method for transport equipment, wherein the method includes steps of: generating calibration information based on process data of a container being successfully hoisted onto a container transport equipment by a lifting spreader, wherein the calibration information includes alignment guidance values calculated from time-sequenced point cloud data of the lifting spreader, container type information, and hoisting equipment information; collecting container type information, task information and hoisting equipment information for pending loading and unloading operations, and matching corresponding calibration information; and performing loading and unloading operations by a hoisting equipment based at least on the alignment guidance values calculated from the point cloud data in the calibration information.

In some embodiments, the step of generating the calibration information includes steps of: collecting point cloud data of the lifting spreader relative to the hoisting equipment by the container transport equipment, during a process of the container being successfully hoisted onto the container transport equipment by the lifting spreader; generating the calibration information and storing it into a calibration information repository, wherein the calibration information includes the alignment guidance values calculated from the point cloud data of the lifting spreader, container transport equipment information, the container type information, and the hoisting equipment information, the calibration information repository is stored in a storage medium of the container transport equipment.

In some embodiments, the step of collecting the point cloud data includes: calculating the alignment guidance values (i.e., offset values) based on structural features of the lifting spreader or the hoisting equipment obtained by fitting original point cloud data; recording the alignment guidance values of the lifting spreader or the hoisting equipment in a time-sequenced manner as parameter information of the hoisting equipment; recording the parameter information of the hoisting equipment in the time-sequenced manner as point cloud information of the hoisting equipment.

In some embodiments, the structural features of the lifting spreader or the hoisting equipment are obtained by: fitting the original point cloud data of the lifting spreader beyond the container to obtain edge point cloud data at intersection of an outer vertical surface and a lower horizontal surface of the lifting spreader.

In some embodiments, the step of generating the calibration information further includes steps of: determining whether the calibration information repository already contains existing calibration information that is the same as the container transport equipment information, the container type information and the hoisting equipment information; if yes, correcting the existing calibration information based on new calibration information; if not, storing the new calibration information into the calibration information repository.

In some embodiments, the step of collecting container type information, task information and hoisting equipment information for pending loading and unloading operations, and matching corresponding calibration information, includes: collecting the container type information, the task information and the hoisting equipment information for the pending loading and unloading operations; matching the alignment guidance values stored in a predefined calibration information repository and calculated from the point cloud data of the lifting spreader with the container type information, the task information and the hoisting equipment information.

In some embodiments, the step of performing the loading and unloading operations includes: the container transport equipment transmitting matched calibration information to the hoisting equipment; the hoisting equipment guiding the lifting spreader to perform the loading and unloading operations based at least on the alignment guidance values calculated from the time-sequenced point cloud data in the calibration information.

In some embodiments, the method further includes steps of: triggering calibration when the container transport equipment fails to guide the lifting spreader to align based on motion posture point cloud information; conducting real-time alignment based on current point cloud data collected by the container transport equipment, wherein the container transport equipment collects and records real-time motion posture of the lifting spreader; updating the calibration information with the point cloud data of the lifting spreader during the real-time alignment once the real-time alignment succeeds.

In some embodiments, the method further includes steps of: during a process of the container transport equipment guiding the lifting spreader to align based on motion posture point cloud information, the hoisting equipment collecting point cloud data of the container and the container transport equipment and detecting whether there is any alignment error; if an alignment errors is detected, conducting real-time alignment based on current point cloud data collected by the hoisting equipment; and updating the calibration information with the point cloud data of the lifting spreader during the real-time alignment once the real-time alignment succeeds.

Embodiments of the present disclosure further provide an adaptive alignment calibration system for transport equipment, wherein the system is used to implement the above-mentioned method and includes: a calibration pre-stored module configured to generate calibration information based on process data of a container being successfully hoisted onto a container transport equipment by a lifting spreader, wherein the calibration information includes alignment guidance values calculated from time-sequenced point cloud data of the lifting spreader, container type information, and hoisting equipment information; an information matching module configured to collect container type information, task information and hoisting equipment information for pending loading and unloading operations, and match corresponding calibration information; and a posture calibration module configured to perform loading and unloading operations by a hoisting equipment based at least on the alignment guidance values calculated from the point cloud data in the calibration information.

Embodiments of the present disclosure further provide an adaptive alignment calibration device for transport equipment, including: a processor; a memory storing executable instructions for the processor; wherein the processor is configured to execute the steps of the above-mentioned method by executing the executable instructions.

Embodiments of the present disclosure further provide a computer-readable storage medium for storing programs, wherein when the programs are executed by a processor, the steps of the above-mentioned method are implemented.

The present disclosure calculates and stores the alignment guidance values during alignment, triggers automatic calibration upon detecting task completion, updates alignment parameters online for reuse, thereby improving efficiency of alignment operations.

### BRIEF DESCRIPTION OF THE DRAWINGS

By reading detailed description of non-limiting embodiments with reference to the following figures, other features, objectives and advantages of the present disclosure will become more apparent.
FIG. 1 is a flowchart of an adaptive alignment calibration method for transport equipment according to the present disclosure.
FIG. 2 is a schematic diagram of an implementation process of the adaptive alignment calibration method for transport equipment according to the present disclosure.
FIGS. 3 to 6 are schematic diagrams of another implementation scenario of the adaptive alignment calibration method for transport equipment according to the present disclosure.
FIG. 7 is a structural schematic diagram of an adaptive alignment calibration system for transport equipment according to the present disclosure.
FIG. 8 is a structural schematic diagram of an adaptive alignment calibration device for transport equipment according to the present disclosure.
FIG. 9 is a structural schematic diagram of a computer-readable storage medium according to one embodiment of the present disclosure.

### DETAILED DESCRIPTION

Embodiments of the present disclosure will be described in detail below with specific examples. Those skilled in the art can easily understand other advantages and effects of the present disclosure from the disclosed content. The present disclosure may also be implemented or applied in different specific embodiments, and details of the present disclosure can be variously modified or altered according to different viewpoints and application systems without departing from the spirit of the present disclosure. It should be noted that, where there is no conflict, the embodiments and features in the embodiments of the present disclosure can be combined with each other.

The following detailed description of the embodiments of the present disclosure is provided with reference to the accompanying drawings, so that those skilled in the art to which the present disclosure pertains can easily implement the present disclosure. The present disclosure may be embodied in many different forms and is not limited to the embodiments described herein.

In the representations of the present disclosure, terms such as "one embodiment", "some embodiments", "an example", "a specific example" and "some examples" mean that a particular feature, structure, material, or characteristic described in connection with the embodiment or example is included in at least one embodiment or example of the present disclosure. Moreover, the specific features, structures, materials and characteristics described may be combined in any suitable manner in one or more embodiments or examples. Furthermore, where there is no contradiction, those skilled in the art may combine and assemble different embodiments or examples of the present disclosure and features of different embodiments or examples.

In order to clearly explain the present disclosure, components irrelevant to the explanation have been omitted, and the same reference numerals are used for the same or similar components throughout the specification.

Throughout the specification, when an element is said to be "connected" to another element, this includes not only a situation of "direct connection" but also a situation of "indirect connection" where other elements are placed between them. Additionally, when an element is said to "include" a certain component, unless specifically stated otherwise, it does not exclude other components, but implies that other components may also be included.

When an element is said to be "on" another element, it can be directly on the other element or can have other elements in between. When specifically stating that an element is "directly" on another element, it means there are no elements in between.

Although the terms "first", "second", etc., are used in the present disclosure to denote various elements, these elements should not be limited by these terms. These terms are only used to distinguish one element from another, such as a first interface and a second interface. Moreover, as used in the present disclosure, the singular forms "a", "an", and "the" are intended to include the plural forms as well, unless the context clearly indicates otherwise. The meaning of "multiple" is two or more, unless otherwise specifically defined. It should further be understood that the terms "comprise" and "include" specify the presence of stated features, steps, operations, elements, components, items, types, and/or groups, but do not preclude the presence, occurrence, or addition of one or more other features, steps, operations, elements, components, items, types, and/or groups. The terms "or" and "and/or" as used herein are interpreted as inclusive, meaning any one or any combination. Therefore, "A, B, or C" or "A, B, and/or C" means any of the following: "A"; "B"; "C"; "A and B"; "A and C"; "B and C"; "A, B, and C". Exceptions to this definition arise only when combinations of elements, functions, steps, or operations are inherently mutually exclusive in some way.

Unless explicitly redefined herein, all technical and scientific terms used in this present disclosure have meanings commonly understood by those skilled in the relevant technical field. Terms defined in commonly used dictionaries are additionally interpreted to have meanings consistent with relevant technical literature and the present disclosure, as long as they are not defined, and should not be excessively interpreted as idealistic or overly formalistic meanings.

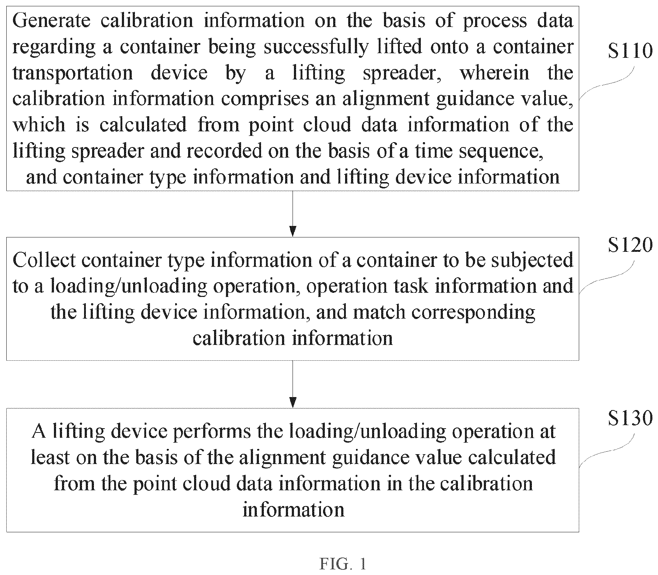

FIG. 1 is a flowchart of an adaptive alignment calibration method for transport equipment according to the present disclosure. As shown in FIG. 1, the adaptive alignment calibration method for transport equipment provided by an embodiment of the present disclosure includes a step S110, a step S120 and a step S130.

The step S110 includes: generating calibration information based on process data of a container being successfully hoisted onto a container transport equipment by a lifting spreader, wherein the calibration information includes alignment guidance values calculated from time-sequenced point cloud data of the lifting spreader, container type information, and hoisting equipment information;

The step S120 includes: collecting container type information, task information and hoisting equipment information for pending loading and unloading operations, and matching corresponding calibration information; and

The step S130 includes: performing loading and unloading operations by a hoisting equipment based at least on the alignment guidance values calculated from the point cloud data in the calibration information.

The adaptive alignment calibration method for transport equipment of the present disclosure does not require manual parameter calibration. Instead, it autonomously calibrates during operations using only initial default parameters, thereby simplifying deployment workload. The method supports autonomous calibration for multiple container types, tasks, and equipment, accommodating various operations such as 45ft, 40ft, 20ft, and dual 20ft container handling.

In some embodiments, the step S110 includes a step S111 and a step S112. The step S111 includes: the container transport equipment collecting point cloud data of the lifting spreader relative to the hoisting equipment, during a process of the container being successfully hoisted onto the container transport equipment by the lifting spreader. The step S112 includes: generating the calibration information and storing it into a calibration information repository, wherein the calibration information includes the alignment guidance values calculated from the point cloud data of the lifting spreader, container transport equipment information, the container type information, and the hoisting equipment information, the calibration information repository is stored in a storage medium of the container transport equipment. However, the present disclosure is not limited to this.

In some embodiments, the step S111 includes a step S1111, a step S1112 and a step S1113. The step S1111 includes: calculating the alignment guidance values (i.e., offset values) based on structural features of the lifting spreader or the hoisting equipment obtained by fitting original point cloud data. The step S1112 includes: recording the alignment guidance values of the lifting spreader or the hoisting equipment in a time-sequenced manner as parameter information of the hoisting equipment. The step S1113 includes: recording the parameter information of the hoisting equipment in the time-sequenced manner as point cloud information of the hoisting equipment. However, the present disclosure is not limited to this.

In some embodiments, the method further includes: a step S1121, fitting the original point cloud data of the lifting spreader beyond the container to obtain edge point cloud data at intersection of an outer vertical surface and a lower horizontal surface of the lifting spreader. However, the present disclosure is not limited to this.

In some embodiments, the step S1121 includes: obtaining ROI (Region of Interest) point cloud based on preset relative position relation between the lifting spreader and the vehicle, combined with heights of the lifting spreader and the container, and extracting spreader features to detect feature position of the lifting spreader. The spreader features to be extracted include the outer vertical surface, an outer edge, and the lower horizontal surface of the lifting spreader. The outer edge is taken as the feature position of the lifting spreader. However, the present disclosure is not limited to this.

In some embodiments, the step S110 further includes: a step S113, determining whether the calibration information repository already contains existing calibration information that is the same as the container transport equipment information, the container type information and the hoisting equipment information; if yes, correcting the existing calibration information based on new calibration information; if not, storing the new calibration information into the calibration information repository. However, the present disclosure is not limited to this.

In some embodiments, the step S120 includes a step S121 and a step S122. The step S121 includes: collecting the container type information, the task information and the hoisting equipment information for the pending loading and unloading operations. The step S122 includes: matching the alignment guidance values stored in a predefined calibration information repository and calculated from the point cloud data of the lifting spreader with the container type information, the task information and the hoisting equipment information. However, the present disclosure is not limited to this.

In some embodiments, the step S130 includes: the container transport equipment transmitting matched calibration information to the hoisting equipment; the hoisting equipment guiding the lifting spreader to perform the loading and unloading operations based at least on the alignment guidance values calculated from the time-sequenced point cloud data in the calibration information. However, the present disclosure is not limited to this.

In some embodiments, the method further includes: a step S140, triggering calibration when the container transport equipment fails to guide the lifting spreader to align based on motion posture point cloud information; conducting real-time alignment based on current point cloud data collected by the container transport equipment, wherein the container transport equipment collects and records real-time motion posture of the lifting spreader; updating the calibration information with the point cloud data of the lifting spreader during the real-time alignment once the real-time alignment succeeds. However, the present disclosure is not limited to this.

In some embodiments, the method further includes: a step S150, during a process of the container transport equipment guiding the lifting spreader to align based on motion posture point cloud information, the hoisting equipment collecting point cloud data of the container and the container transport equipment and detecting whether there is any alignment error; if an alignment errors is detected, conducting real-time alignment based on current point cloud data collected by the hoisting equipment; and updating the calibration information with the point cloud data of the lifting spreader during the real-time alignment once the real-time alignment succeeds. However, the present disclosure is not limited to this.

The adaptive alignment calibration method for transport equipment of the present disclosure offers a self-learning dynamic calibration algorithm and solution for autonomous vehicles, which calculates and stores the alignment guidance values during alignment, triggers automatic calibration upon detecting task completion, updates alignment parameters online for reuse, thereby improving efficiency of alignment operations.

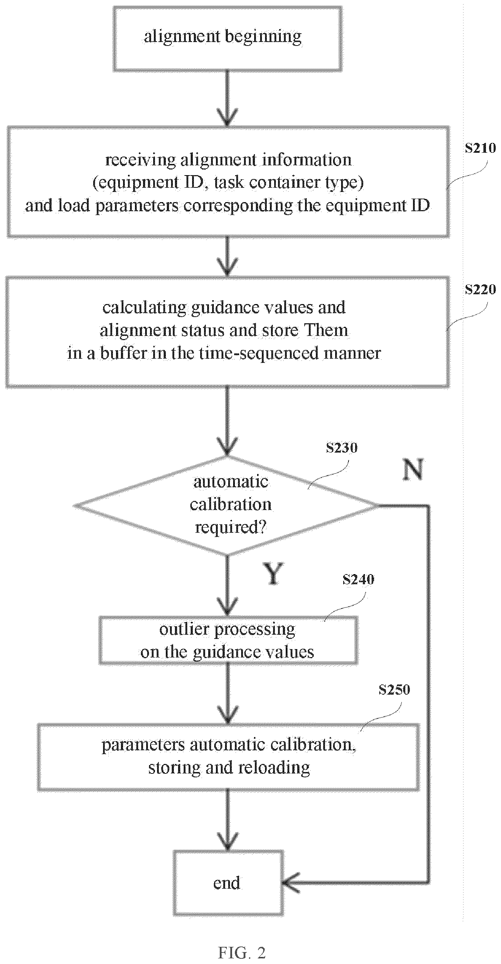

FIG. 2 illustrates an implementation process of the adaptive alignment calibration method for transport equipment according to the present disclosure. As shown in FIG. 2, the present disclosure focuses on explaining the automatic calibration function, while other related modules (e.g., the alignment guidance value calculation module) are not detailed. The implementation process primarily includes a step S210, a step S220 and a step S230.

The step S210 includes: receiving a task container type and an equipment ID number of the hoisting equipment, and load parameters corresponding the equipment ID. For example, receive the task container type (e.g., 20ft/40ft/45ft) and the equipment ID from an upstream module and store them into alignment information.

The step S220 includes: calculating the alignment guidance values for alignment, and store the alignment guidance values and alignment status in a buffer in the time-sequenced manner.

The step S230 includes: determining whether automatic calibration is required. The automatic calibration is not needed for every operation. It is triggered only when the vehicle deems alignment complete but actual alignment fails, the automatic calibration is needed. Wherein calibration signals can be generated by the upstream module (e.g., a task management system, FMS, etc.), or be autonomously determined by the vehicle itself.

Steps for the vehicle to autonomously determine the calibration signals include a step S240 and a step S250.

The step S240 includes: the guidance value calculation module determining that the current alignment status is successful, the vehicle autonomously detecting changes in the container position and determining whether any changes have occurred. If, from the time alignment is deemed successful until the container information changes, the vehicle was not stationary during the alignment task, the vehicle autonomously triggers automatic calibration.

The step S250 includes: automatic calibration of parameters. Perform outlier processing on the guidance values, and identify the guidance values before and after container grabbing or placing based on the time-sequenced data. A parameter "calib_param" requiring calibration is determined according to the alignment information (i.e., the equipment ID, the task container type, the operation type, etc.). A calibrated parameter "calibrated_param" is calculated by the following formula: calibrated_param=param+offset.

Wherein "calibrated_param" represents the calibrated parameter, "param" represents a parameter actually used during alignment, "offset" represents an average of the guidance values immediately before and after the completion of the operational task, based on time-sequenced data. However, the present disclosure is not limited to this.

Additionally, the method further includes parameter integration and reuse. A calibration file is maintained for each vehicle, and parameters are updated and stored in the file after each automatic calibration. Parameters will be reloaded to ensure that the latest calibrated parameters are used for the next alignment.

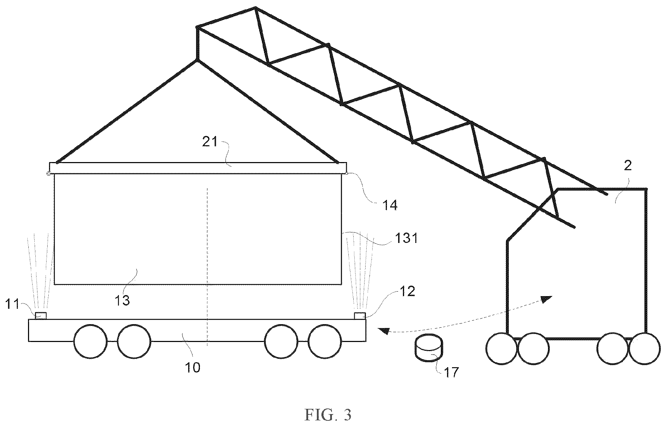

FIGS. 3 to 6 are schematic diagrams of another implementation scenario of the adaptive alignment calibration method for transport equipment according to the present disclosure. As shown in FIG. 3, an autonomous container carrier 10 includes a first point cloud acquisition device 11 and a second point cloud acquisition device 12. The first point cloud acquisition device 11 is located at a front end of the autonomous container carrier 10, and the second point cloud acquisition device 12 is located at a rear end of the autonomous container carrier 10. Both the first point cloud acquisition device 11 and the second point cloud acquisition device 12 have an upward field of view, and a placement position of a container 13 is between the two point cloud acquisition devices. When a mobile crane 2 lifts the container 13 onto the autonomous container carrier 10, the original point cloud data of the container 13 above is acquired by the point cloud acquisition devices installed at the front end or the rear end of the autonomous container carrier 10.

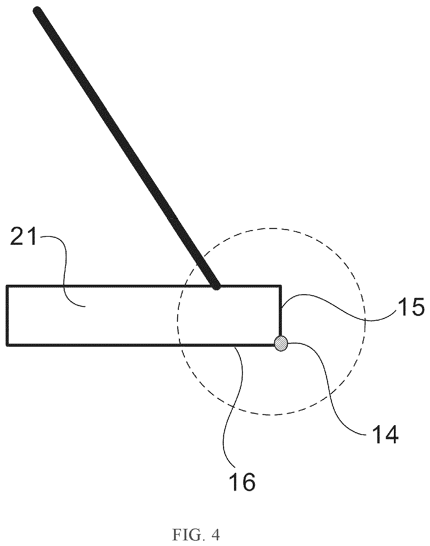

As shown in FIG. 4, edge point cloud data of a lifting spreader 21 is obtained by fitting the original point cloud data. Specifically, an outer vertical surface 15 and a lower horizontal surface 16 of the lifting spreader 21 extending beyond the container 13 are fitted from the original point cloud data, and then an outer edge 14 at the intersection of the outer vertical surface 15 and lower horizontal surface 16 is calculated to generate the edge point cloud data. In this embodiment, existing plane fitting methods can be used to obtain the outer vertical surface 15 and the lower horizontal surface 16, and then the position of the outer edge 14 can be determined according to coordinates where the outer vertical surface 15 and the lower horizontal surface 16 intersect. The edge point cloud data of the lifting spreader 21 is used to represent its motion. The edge point cloud data of the lifting spreader 21 is recorded in the time-sequenced manner as the point cloud information of the mobile crane 2. Moreover, a calibration information is generated and stored to the calibration information repository. The calibration information includes alignment guidance values calculated from the point cloud data of the lifting spreader 21, equipment information of the mobile crane 2, container type information of the container 13, and information of the mobile crane 2 (i.e., information of the container transport equipment). Furthermore, determine whether the calibration information repository already contains existing calibration information that is the same as the equipment information of the mobile crane 2, the container type information and the information of the mobile crane 2; if yes, correct the existing calibration information based on new calibration information; if not, store the new calibration information into the calibration information repository. The calibration information repository is stored in storage medium such as hard drives or memory of the container transport equipment. The container transport equipment can be gantry cranes, mobile cranes, etc., used for handling containers.

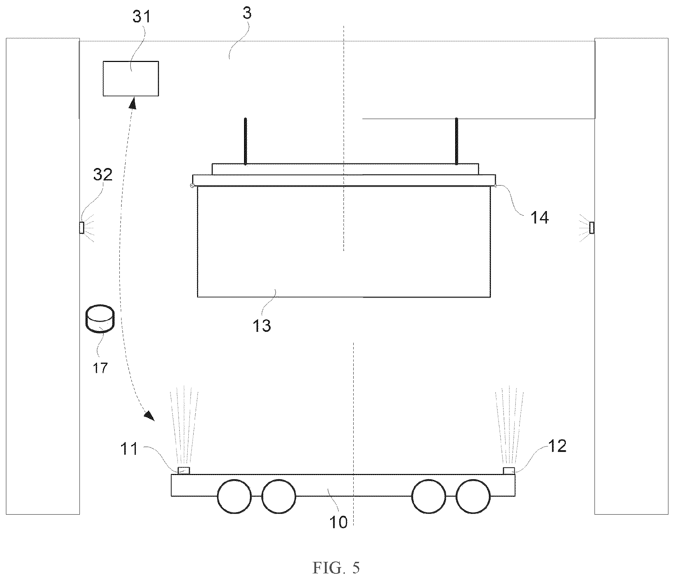

As shown in FIG. 5, when the autonomous container carrier 10 performs other lifting tasks (such as a gantry crane 3 lifting the container 13 onto the autonomous container carrier 10), the first point cloud acquisition device 11 and the second point cloud acquisition device 12 of the autonomous container carrier 10 acquire the container type information of the container 13 to be loaded or unloaded, the operation task information, and the information of the container transport equipment (i.e., the gantry crane 3). In the preset calibration information repository stored in the container transport equipment, match the alignment guidance values 17 calculated from the point cloud data information of the lifting spreader 21 with the container type information, the operation task information and the information of the gantry crane 3, and then send the alignment guidance values 17 to a control system 31 of the gantry crane 3 through a communication device of the container transport equipment. This enables the control system 31 of the gantry crane 3 to use the point cloud acquisition device 32 to capture real-time movement posture of the lifting spreader, and to guide or correct the real-time movement posture using alignment guidance values calculated from point cloud data information at different sequences of successful gantry crane container lifts, thereby enhancing accuracy and safety of the alignment during the lifting process.

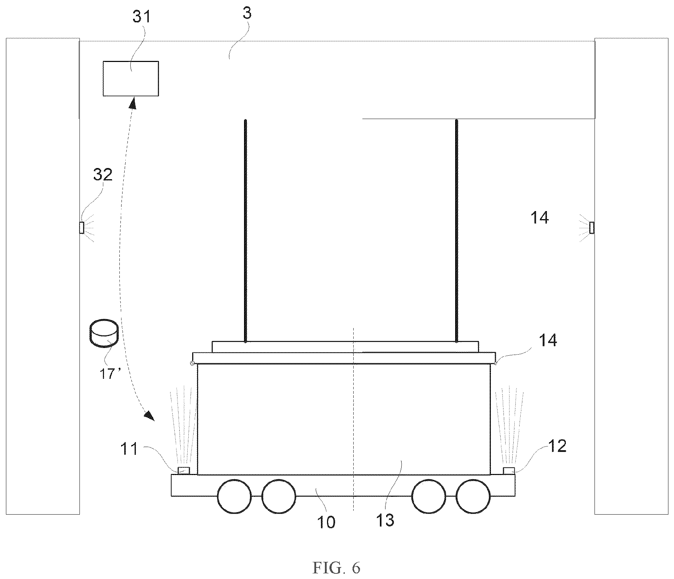

As shown in FIG. 6, when the autonomous container carrier 10 guides the lifting spreader 21 for alignment based on the movement posture point cloud information, the point cloud acquisition device 32 of the gantry crane 3 intermittently collects the point cloud data of the container 13 and the autonomous container carrier 10. If an alignment error is detected based on the data from the point cloud acquisition device 32, the use of movement posture point cloud information 17 for guidance is stopped, and real-time alignment guidance is instead based on current point cloud data collected in real-time by the gantry crane 3. The first point cloud acquisition device 11 and the second point cloud acquisition device 12 of the autonomous container carrier 10 collect and record the real-time movement posture of the lifting spreader. Once real-time alignment is successful, the gantry crane 3 generates calibration information containing new movement posture point cloud information 17' and stores it to the calibration information repository. The point cloud information of the lifting spreader 21 used during the real-time alignment process is used to update the previous calibration information. This approach reduces the overall computational load while enhancing safety, achieving a better balance between computational efficiency and safety.

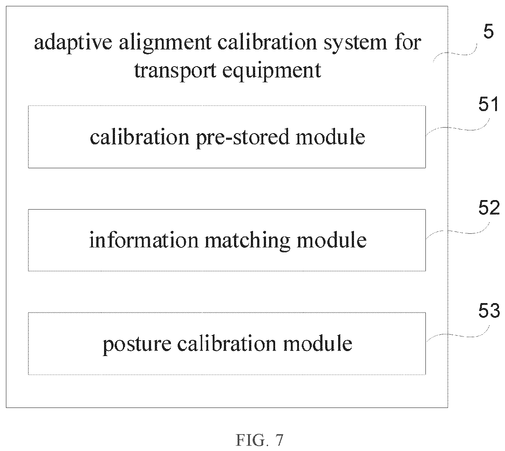

FIG. 7 is a structural schematic diagram of an adaptive alignment calibration system for transport equipment according to the present disclosure. As shown in FIG. 7, an adaptive alignment calibration system 5 for transport equipment according to the present disclosure includes:
a calibration pre-stored module 51 configured to generate calibration information based on process data of a container being successfully hoisted onto a container transport equipment by a lifting spreader, wherein the calibration information includes alignment guidance values calculated from time-sequenced point cloud data of the lifting spreader, container type information, and hoisting equipment information;
an information matching module 52 configured to collect container type information, task information and hoisting equipment information for pending loading and unloading operations, and match corresponding calibration information; and
a posture calibration module 53 configured to perform loading and unloading operations by a hoisting equipment based at least on the alignment guidance values calculated from the point cloud data in the calibration information.

In some embodiments, the calibration pre-stored module 51 is further configured to: collect point cloud data of the lifting spreader relative to the hoisting equipment by the container transport equipment, during a process of the container being successfully hoisted onto the container transport equipment by the lifting spreader; and generate the calibration information and storing it into a calibration information repository, wherein the calibration information includes the alignment guidance values calculated from the point cloud data of the lifting spreader, container transport equipment information, the container type information, and the hoisting equipment information, the calibration information repository is stored in a storage medium of the container transport equipment.

In some embodiments, the calibration pre-stored module 51 is further configured to: calculate the alignment guidance values based on structural features of the lifting spreader or the hoisting equipment obtained by fitting original point cloud data; record the alignment guidance values of the lifting spreader or the hoisting equipment in a time-sequenced manner as parameter information of the hoisting equipment; record the parameter information of the hoisting equipment in the time-sequenced manner as point cloud information of the hoisting equipment.

In some embodiments, the calibration pre-stored module 51 is further configured to: fit the original point cloud data of the lifting spreader beyond the container to obtain edge point cloud data at intersection of an outer vertical surface and a lower horizontal surface of the lifting spreader.

In some embodiments, the calibration pre-stored module 51 is further configured to: determine whether the calibration information repository already contains existing calibration information that is the same as the container transport equipment information, the container type information and the hoisting equipment information; if yes, correct the existing calibration information based on new calibration information; if not, store the new calibration information into the calibration information repository.

In some embodiments, the information matching module 52 is further configured to: collect the container type information, the task information and the hoisting equipment information for the pending loading and unloading operations; match the alignment guidance values stored in a predefined calibration information repository and calculated from the point cloud data of the lifting spreader with the container type information, the task information and the hoisting equipment information.

In some embodiments, the posture calibration module 53 is further configured to: make the container transport equipment transmit matched calibration information to the hoisting equipment; make the hoisting equipment guide the lifting spreader to perform the loading and unloading operations based at least on the alignment guidance values calculated from the time-sequenced point cloud data in the calibration information.

In some embodiments, the system further includes a self-check and calibration module configured to: trigger calibration when the container transport equipment fails to guide the lifting spreader to align based on motion posture point cloud information; conduct real-time alignment based on current point cloud data collected by the container transport equipment, wherein the container transport equipment collects and records real-time motion posture of the lifting spreader; update the calibration information with the point cloud data of the lifting spreader during the real-time alignment once the real-time alignment succeeds.

In some embodiments, the system further includes an external calibration module. During a process of the container transportation equipment guiding the lifting spreader to align based on motion posture point cloud information, the hoisting equipment collects point cloud data of the container and the container transport equipment and detects whether there is any alignment error; if an alignment errors is detected, the external calibration module conducts real-time alignment based on current point cloud data collected by the hoisting equipment, and updates the calibration information with the point cloud data of the lifting spreader during the real-time alignment once the real-time alignment succeeds.

The adaptive alignment calibration system for transport equipment of the present disclosure calculates and stores the alignment guidance values during alignment, triggers automatic calibration upon detecting task completion, updates alignment parameters online for reuse, thereby improving efficiency of alignment operations.

Embodiments of the present disclosure further provide a adaptive alignment calibration device for transport equipment, including: a processor; a memory storing executable instructions for the processor; wherein the processor is configured to execute the executable instructions to perform the steps of the adaptive alignment calibration method for transport equipment.

As described above, the adaptive alignment calibration device for transport equipment calculates and stores the alignment guidance values during alignment, triggers automatic calibration upon detecting task completion, updates alignment parameters online for reuse, thereby improving efficiency of alignment operations.

Technical personnel in the relevant field can understand that various aspects of this present disclosure can be implemented as systems, methods, or program products. Therefore, various aspects of the present disclosure can be specifically implemented in the following forms: a purely hardware implementation, a purely software implementation (including firmware, microcode, etc.), or a combined implementation of hardware and software. These can be collectively referred to as "circuits", "modules", or "platforms".

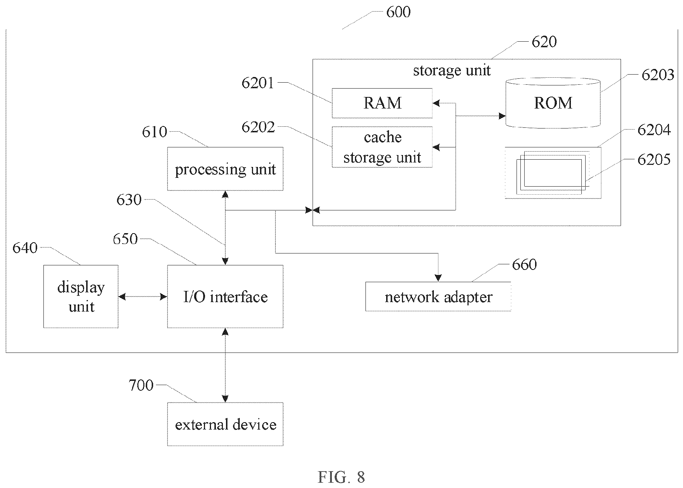

FIG. 8 is a schematic diagram of a structure of the according to the present disclosure. An electronic device 600 (i.e., the adaptive alignment calibration device for transport equipment) according to the embodiments of the present disclosure will be described below with reference to FIG. 8. The electronic device 600 shown in FIG. 8 is merely an example and should not impose any limitation on the functionality and scope of use of the embodiments of the present disclosure.

As shown in FIG. 8, the electronic device 600 is presented in the form of a general-purpose computing device. Components of the electronic device 600 may include, but are not limited to, at least one processing unit 610, at least one storage unit 620, a bus 630 that connects various components including the storage unit 620 and the processing unit 610, a display unit 640, and so on.

The storage unit stores program code, which can be executed by the processing unit 610, enabling the processing unit 610 to perform the steps of the point cloud-based re-anchoring method for lifting spreaders of the specification according to various exemplary embodiments of the present disclosure. For example, the processing unit 610 can perform the steps shown in FIG. 1.

The storage unit 620 may include readable media in the form of volatile storage units, such as random access memory (RAM) 6201 and/or cache memory 6202, and may further include read-only memory (ROM) 6203.

The storage unit 620 may also include program/utilities 6204 with a set (at least one) of program modules 6205. Such program modules 6205 include, but are not limited to, an operating system, one or more application programs, other program modules, and program data, each or some combination of these examples may include implementations of a network environment.

The bus 630 may represent one or more of several types of bus structures, including a storage unit bus or storage unit controller, a peripheral bus, a graphics acceleration port, a processing unit, or a local bus using any of various bus structures.

The electronic device 600 may also communicate with one or more external devices 700 (e.g., keyboard, pointing device, Bluetooth device, etc.), and may also communicate with one or more devices that enable a user to interact with the electronic device 600, and/or with any device that enables the electronic device 600 to communicate with one or more other computing devices (e.g., router, modem, etc.). Such communication may occur via input/output (I/O) interfaces 650. Additionally, the electronic device 600 may communicate with one or more networks (e.g., local area network (LAN), wide area network (WAN), and/or public networks such as the Internet) through a network adapter 660. The network adapter 660 may communicate with other modules of the electronic device 600 via the bus 630. It should be understood that, although not shown in the FIG., other hardware and/or software modules may be used in conjunction with the electronic device 600, including but not limited to: microcode, device drivers, redundant processing units, external disk drive arrays, RAID systems, tape drives, and data backup storage platforms, etc.

Embodiments of the present disclosure further provide a computer-readable storage medium for storing programs, wherein when the programs are executed by a processor, the steps of the adaptive alignment calibration device for transport equipment are performed. In some possible implementations, various aspects of the present disclosure can also be realized in the form of a program product, which includes program code that, when run on a terminal device, causes the terminal device to execute the steps of the re-anchoring method described in this specification according to various exemplary embodiments of the present disclosure.

As described above, when the programs stored in the computer-readable storage medium are executed, it can achieve: calculating and storing the alignment guidance values during alignment, triggering automatic calibration upon detecting task completion, updating alignment parameters online for reuse, thereby improving efficiency of alignment operations.

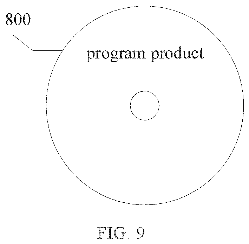

FIG. 9 is a schematic diagram of a structure of the computer-readable storage medium of the present disclosure. Referring to FIG. 9, a program product 800 for implementing the above method according to embodiments of the present disclosure is described. It may take the form of a portable compact disc read-only memory (CD-ROM) and include program code, which can run on terminal devices such as personal computers. However, the program product of the present disclosure is not limited to this. In this document, the readable storage medium can be any tangible medium that contains or stores a program, which can be used by or in combination with an instruction execution system, apparatus, or device.

The program product can take the form of any combination of one or more readable media. A readable medium may be a readable signal medium or a readable storage medium. A readable storage medium may include, but is not limited to, an electrical, magnetic, optical, electromagnetic, infrared, or semiconductor system, apparatus, or device, or any combination thereof. More specific examples of readable storage media (a non-exhaustive list) include: electrical connections with one or more wires, portable disks, hard drives, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

A computer-readable storage medium may include a propagated data signal embodied in baseband or as part of a carrier wave, which contains readable program code. Such a propagated data signal may take various forms, including but not limited to electromagnetic signals, optical signals, or any suitable combination of the above. A readable medium may also be any readable medium other than a readable storage medium, which can transmit, propagate, or carry the program for use by or in connection with an instruction execution system, apparatus, or device. The program code contained on a readable storage medium can be transmitted using any suitable medium, including but not limited to wireless, wired, optical fiber, RF, and so on, or any suitable combination of the above.

The program code for performing operations of the present disclosure can be written in any combination of one or more programming languages, including object-oriented programming languages such as Java, C++, and conventional procedural programming languages such as the "C" language or similar programming languages. The program code may execute entirely on the user's computing device, partly on the user's device, as a standalone software package, partly on the user's computing device and partly on a remote computing device, or entirely on a remote computing device or server. In the case of remote computing devices, they may be connected to the user's computing device via any type of network, including local area networks (LAN) or wide area networks (WAN), or may be connected to external computing devices (e.g., through an Internet service provider to connect over the Internet).

As described above, the adaptive alignment calibration method, system and device for transport equipment, and the storage medium of the present disclosure calculate and store the alignment guidance values during alignment, trigger automatic calibration upon detecting task completion, update alignment parameters online for reuse, thereby improving efficiency of alignment operations.

The above content provides a further detailed description of the present disclosure in connection with specific preferred embodiments, and it should not be construed that the specific implementations of the present disclosure are limited solely to these descriptions. For those of ordinary skill in the art to which this present disclosure pertains, several simple deductions or substitutions can be made without departing from the spirit of the present disclosure, which should be considered as falling within the scope of the present disclosure.

## Claims

1. An adaptive alignment calibration method for transport equipment, **characterized by** comprising steps of:
generating calibration information based on process data of a container being successfully hoisted onto a container transport equipment by a lifting spreader, wherein the calibration information comprises alignment guidance values calculated from time-sequenced point cloud data of the lifting spreader, container type information, and hoisting equipment information;
collecting container type information, task information and hoisting equipment information for pending loading and unloading operations, and matching corresponding calibration information; and
performing loading and unloading operations by a hoisting equipment based at least on the alignment guidance values calculated from the point cloud data in the calibration information.

2. The method according to claim 1, wherein the step of generating the calibration information comprises steps of:
collecting point cloud data of the lifting spreader relative to the hoisting equipment by the container transport equipment, during a process of the container being successfully hoisted onto the container transport equipment by the lifting spreader;
generating the calibration information and storing it into a calibration information repository, wherein the calibration information comprises the alignment guidance values calculated from the point cloud data of the lifting spreader, container transport equipment information, the container type information, and the hoisting equipment information, the calibration information repository is stored in a storage medium of the container transport equipment.

3. The method according to claim 2, wherein the step of collecting the point cloud data comprises:
calculating the alignment guidance values based on structural features of the lifting spreader or the hoisting equipment obtained by fitting original point cloud data;
recording the alignment guidance values of the lifting spreader or the hoisting equipment in a time-sequenced manner as parameter information of the hoisting equipment;
recording the parameter information of the hoisting equipment in the time-sequenced manner as point cloud information of the hoisting equipment.

4. The method according to claim 2, wherein the step of generating the calibration information further comprises steps of:
determining whether the calibration information repository already contains existing calibration information that is the same as the container transport equipment information, the container type information and the hoisting equipment information;
if yes, correcting the existing calibration information based on new calibration information;
if not, storing the new calibration information into the calibration information repository.

5. The method according to claim 1, wherein the step of collecting container type information, task information and hoisting equipment information for pending loading and unloading operations, and matching corresponding calibration information, comprises:
collecting the container type information, the task information and the hoisting equipment information for the pending loading and unloading operations;
matching the alignment guidance values stored in a predefined calibration information repository and calculated from the point cloud data of the lifting spreader with the container type information, the task information and the hoisting equipment information.

6. The method according to claim 1, wherein the step of performing the loading and unloading operations comprises:
the container transport equipment transmitting matched calibration information to the hoisting equipment;
the hoisting equipment guiding the lifting spreader to perform the loading and unloading operations based at least on the alignment guidance values calculated from the time-sequenced point cloud data in the calibration information.

7. The method according to claim 1 further comprising a step of:
triggering calibration when the container transport equipment fails to guide the lifting spreader to align based on motion posture point cloud information;
conducting real-time alignment based on current point cloud data collected by the container transport equipment, wherein the container transport equipment collects and records real-time motion posture of the lifting spreader;
updating the calibration information with the point cloud data of the lifting spreader during the real-time alignment once the real-time alignment succeeds.

8. The method according to claim 1 further comprising a step of:
during a process of the container transport equipment guiding the lifting spreader to align based on motion posture point cloud information, the hoisting equipment collecting point cloud data of the container and the container transport equipment and detecting whether there is any alignment error;
if an alignment errors is detected, conducting real-time alignment based on current point cloud data collected by the hoisting equipment; and
updating the calibration information with the point cloud data of the lifting spreader during the real-time alignment once the real-time alignment succeeds.

9. An adaptive alignment calibration system for transport equipment, **characterized by** comprising:
a calibration pre-stored module configured to generate calibration information based on process data of a container being successfully hoisted onto a container transport equipment by a lifting spreader, wherein the calibration information comprises alignment guidance values calculated from time-sequenced point cloud data of the lifting spreader, container type information, and hoisting equipment information;
an information matching module configured to collect container type information, task information and hoisting equipment information for pending loading and unloading operations, and match corresponding calibration information; and
a posture calibration module configured to perform loading and unloading operations by a hoisting equipment based at least on the alignment guidance values calculated from the point cloud data in the calibration information.

10. An adaptive alignment calibration device for transport equipment, **characterized by** comprising:
a processor;
a memory storing executable instructions for the processor;
wherein the processor is configured to execute the steps of the method according to any one of claims 1 to 8 by executing the executable instructions.

11. A computer-readable storage medium for storing programs, **characterized in that** when the programs are executed by a processor, the steps of the method according to any one of claims 1 to 8 are implemented.
